# EUROPEAN PATENT SPECIFICATION

(11) **EP 2 021 117 B1**
(45) Date of publication and mention of the grant of the patent: **15.12.2010**
(21) Application number: 07724868.0
(22) Date of filing: 04.05.2007
(51) Int. Cl.: B01J 8/00, C08F 10/00, C08K 5/00, C08F 2/00

(54) **METHOD OF METERING ANTISTATICS INTO POLYMERIZATION REACTORS**
VERFAHREN ZUR EINDOSIERUNG VON ANTISTATIKA IN POLYMERISATIONSREAKTOREN
MÉTHODE DE DOSAGE D'AGENTS ANTISTATIQUES DANS DES RÉACTEURS DE POLYMÉRISATION

(30) Priority: 11.05.2006 DE 102006022256; 13.06.2006 US 813235 P
(43) Date of publication of application: 11.02.2009
(73) Proprietor: Basell Polyolefine GmbH, 50389 Wesseling (DE)
(72) Inventor: MIHAN, Shahram, 65812 Bad Soden (DE); KARER, Rainer, 67657 Kaiserslautern (DE); HECKER, Manfred, 53577 Neustadt Wied (DE)
(86) International application number: PCT/EP2007/003943
(87) International publication number: WO 2007/131645

(56) References cited:
- WO-A-02/094891

## Description

The invention relates to a method of for metering polar, antistatically acting process auxiliaries into a polymerization reactor in which the process auxiliaries are present in solution in a nonpolar solvent.

In continuous gas-phase polymerization, antistatics are used to avoid electrostatic charging. Antistatically acting process auxiliaries generally comprise organic compounds having polar functional groups such as acid or ester groups, amine or amide groups or hydroxyl or ether groups. Examples of constituents of typical antistatics are polysulfone copolymers, polymeric polyamines, oil-soluble sulfonic acids or polysiloxanes.

In olefin polymerization, dilute solutions of the antistatics are generally metered in in order to avoid polymer deposits on the reactor wall and lump formation. Concentration fluctuations can occur in the solutions as a result of, for example, the effect of cold, aging phenomena, incomplete homogenization of the solution, precipitation of one or more of the components or simply as a result of a batch change. In the case of relatively large fluctuations, operational malfunctions through to plant shutdowns can occur.

To avoid electrostatic charges and the process engineering problems associated therewith, the electrostatic charges are monitored in gas-phase polymerization reactors by means of electrostatic sensors in order to be able to undertake countermeasures in good time. However, in the case of relatively high charging, the sensors alone are not able to determine whether fluctuations in the introduction of antistatically active process auxiliaries or other causes are responsible for this.

It was therefore an object of the invention to overcome the abovementioned disadvantages of the prior art and to provide a method which allows more uniform metering and monitoring of process auxiliaries, in particular antistatics.

The invention provides a method of the abovementioned type in which the electrical conductivity of the solution is measured and the amount of the process auxiliary metered in is determined from the electrical conductivity.

The measurement of the conductivity of the solution allows the content of antistatic in the solution to be determined in a simple manner and thus enables the amount introduced into the polymerization reactor to be controlled.

For the purposes of the present invention, a polar antistatically acting process auxiliary is a chemical compound or a mixture of chemical compounds which has an electrical conductivity of at least 0.05 µS/cm and is able to reduce negative or positive electrostatic charges in the reactor. The process auxiliary preferably has an electrical conductivity of at least 0.10 µS/cm, more preferably at least 0.20 µS/cm, more preferably 0.50 µS/cm, particularly preferably 1.0 µS/cm.

Preferred antistatically acting compounds are those having a molar mass of at least 100 g/mol, more preferably at least 150 g/mol, particularly preferably at least 200 g/mol, with mixtures comprising at least one such antistatically acting compound also being preferred. Further preference is given to organic antistatically acting compounds, with those having at least 5, in particular at least 10, carbon atoms being particularly advantageous.

The antistatically acting compound preferably has hydrogen-comprising functional groups selected from among -OH, -COOH, -NH₂, -NHR¹, -SH, -PH₂, -PHR¹ and -SO₃H, where R¹ is an alkyl, aryl, alkylaryl or arylalkyl radical in which one or more carbon atoms may also be replaced by heteroatoms.

In addition, further functional groups which do not bear any hydrogen, e.g. -OR¹, -COOR¹, -SO₃R¹, -SiO₂R¹, -NR¹R², -CHO, -CO-R¹, where R¹ and R² are each, independently of one another, an alkyl, aryl, alkylaryl or arylalkyl radical in which one or more carbon atoms may also be replaced by heteroatoms and the radicals R¹ and R² may together form a ring, can preferably also be present.

Particularly preferred process auxiliaries are those comprising finely divided porous carbon blacks, higher polyhydric alcohols and their ethers, for example sorbitol, polyalcohols, polyalcohol ethers, polyvinyl alcohols, polyethylene glycols and their ethers with fatty alcohols, anion-active substances such as C₁₂-C₂₂-fatty acid soaps of alkali or alkaline earth metals, salts of alkylsulfates of higher primary or secondary alcohols having the general formula ROSO₃M (M = alkali metal, alkaline earth metal) or (RR')CHOSO₃M, salts of mixed esters of polyfunctional alcohols with higher fatty acids and sulfuric acid, C₁₂-C₂₂-sulfonic acids or their salts of the general formula RSO₃M, alkylarylsulfonic acids or their salts, e.g. dodecylbenzenesulfonic acid, phosphoric acid derivatives such as di(alkoxypolyethoxyethyl)phosphates of the general formula [RO(CH₂CH₂O)ₙ]₂POOM or phytic acid derivatives as disclosed, for example, in EP-A 453116, cation-active deactivators such as quaternary ammonium salts of the general formula R¹R²R³R⁴NX, where X is a halogen atom and R¹ to R⁴ are, independently of one another, an alkyl radical, preferably one having at least 8 carbon atoms. Also suitable are, for example, metal complexes such as the cyanophthalocyanines disclosed in WO 93/24562.

Particularly useful process auxiliaries are nonvolatile nitrogen-comprising compounds such as amines or amides or their salts, in particular oligomeric or polymeric amines and amides. Examples which may be mentioned are polyethoxyalkylamines or polyethoxyalkylamides of the general formula R'N[(R²o)ₘR ][(R³O)ₙH] or R¹CON[(R₂O)ₘR][(R³O)ₙH], where R¹ to R³ are alkyl radicals, in the case of R¹ preferably alkyl radicals having at least 8 carbon atoms, preferably at least 12 carbon atoms, and n, m are equal to or greater than 1, as described in DE-A 31 088 43. These are also constituents of commercial antistatics (e.g. Atmer® 163; from Uniqema). It is also possible to use salt mixtures comprising calcium salts of Medialanic acid and chromium salts of N-stearylanthranilic acid, as described in DE-A 3543360, or mixtures of a metal salt of Medialanic acid, a metal salt of anthranilic acid and a polyamine as described in EP-AO 636 636.

Further particularly useful process auxiliaries are polyamines or polyamine copolymers or mixtures of such compounds with further compounds, in particular polymeric compounds. Apart from simple polyamines such as polyvinylamine, suitable nonvolatile polyamines are advantageously obtained from the reaction of aliphatic primary monoamines such as n-octylamine or n-dodecylamine or N-alkyl-substituted aliphatic diamines such as N-n-hexadecyl-1,3-propanediamine and epichlorohydrin. These polyaminopolyols have not only amino groups but also hydroxyl groups. An overview of such polyamine copolymers is given in US 3,917,466. Polysulfone copolymers are particularly suitable polymers for use together with polyamines or polyamine copolymers. The polysulfone copolymers are preferably largely unbranched and are made up of olefins and SO₂ units in a molar ratio of 1:1.1-Decene polysulfone may be mentioned by way of example. An overview of suitable polysulfone copolymers is also given in US 3,917,466.

In a particularly preferred embodiment, an antistatically acting compound comprises a polysulfone copolymer, a polymeric polyamine and an oil-soluble sulfonic acid. Mixtures of this type are described, for example, in WO 00/68274 or WO 02/040554. Preferred sulfonates are monosubstituted or disubstituted phenylsulfonates or naphthylsulfonates.

Further antistatically acting compounds may be found in FR 2478654, US 5026795, EP-A 453116, US 4675368, EP-A 584574 or US 5391657.

For the purposes of the present invention, a nonpolar solvent is a solvent having a conductivity of not more than 0.01 µS/cm, preferably not more than 10⁻³ µS/cm, particularly preferably not more than 10⁻⁴ µS/cm. The conductivity of the process auxiliary should if possible be 10 times, preferably 100 times, particularly preferably 1000 times, that of the solvent.

The solvent can be inorganic or preferably organic. Preference is given to C₃-C₂₀-alkanes, more preferably C₃-C₁₂-alkanes, particularly preferably C₃-C₈-alkanes.

The measurement of the conductivity of dilute solutions is generally known. It can be carried out using customary conductivity meters. The measuring instrument should be able to resolve conductivities of from 10⁻³ to 10 µS/cm.

The measurement can be carried out continuously or discontinuously. Preference is given to a continuous measurement. In the case of discontinuous measurement, the measurement is preferably carried out at short intervals of not more than a few minutes in order to ensure good monitoring.

The amount of the solution of the process auxiliary metered into the reactor per unit time is preferably measured in parallel. The measurement of the conductivity can in this case be carried out in series to the flow measurement in the metering line or parallel thereto in a bypass.

The amount of the process auxiliary metered in is determined from the conductivity of the solution. This can be done, for example, by simple comparison of the measured conductivity value with previously measured conductivities of solutions of known concentrations. When the amount of solution metered in is known, the current amount of process auxiliary can be calculated therefrom.

The conductivity measurement is preferably part of a regulation of the amount of process auxiliaries metered into the reactor per unit time. The amount of process auxiliary determined by conductivity measurement is compared with a set value and, in the case of deviations of the flow of the solution comprising the process auxiliary, is adjusted up or down accordingly. The process is particularly preferably integrated into an advanced process controller (APC).

The metering of the process auxiliaries into the reactor can be carried out by means of all customary methods. The process auxiliary can be metered into the reactor separately from other materials. However, it is preferably metered in together with other materials having a low conductivity. It is particularly preferably metered in together with metal alkyls and other scavengers. It can be metered directly into the reactor or into a line leading to the reactor.

For the purposes of the present invention, metal alkyls are compounds of metals or semimetals with linear or cyclic alkyls which are able to react with the active hydrogen of the antistatics. Suitable metal alkyls are those of the general formula (I),

M^{G} (R^{1G})ᵣG(R^{2G})ₛG (R^{3G})ₜG (I)

where
- M^{G}: is Li. Na, K, Be, Mg, Ca, Sr, Ba, boron, aluminum, gallium, indium, thallium, zinc, in particular Li, Na, K, Mg, boron, aluminum or Zn,
- R^{1G}: is hydrogen, C₁-C₁₀-alkyl, C₆-C₁₅-aryl, alkylaryl or arylalkyl each having from 1 to 10 carbon atoms in the alkyl radical and from 6 to 20 carbon atoms in the aryl radical,
- R^{2G} and R^{3G}: are each hydrogen, halogen, C₁-C₁₀-alkyl, C₆-C₁₅-aryl, alkylaryl, arylalkyl or alkoxy each having from 1 to 20 carbon atoms in the alkyl radical and from 6 to 20 carbon atoms in the aryl radical, or alkoxy with C₁-C₁₀-alkyl or C₆-C₁₅-aryl,
- r^{G}: is an integer from 1 to 3 and
- s^{G} and t^{G}: are integers in the range from 0 to 2, with the sum r^{G}+s^{G}+t^{G}corresponding to the valence of M^{G},
with the metal alkyls usually not being identical to the activators for the catalysts. It is also possible to use mixtures of various metal alkyls of the formula (I).

Among the metal alkyls of the general formula (I), preference is given to those in which
- M^{G}: is lithium, magnesium, boron or aluminum and
- R^{1G}: is C₁-C₂₀-alkyl.

Particularly preferred metal alkyls of the formula (I) are methyllithium, ethyllithium, n-butyllithium, methylmagnesium chloride, methylmagnesium bromide, ethylmagnesium chloride, ethylmagnesium bromide, butylmagnesium chloride, dimethylmagnesium, diethylmagnesium, dibutylmagnesium, n-butyl-n-octylmagnesium, n-butyl-n-heptylmagnesium, in particular n-butyl-n-octylmagnesium, tri-n-hexylaluminum, triisobutylaluminum, tri-n-butylaluminum, triethylaluminum, dimethylaluminum chloride, dimethylaluminum fluoride, methylaluminum dichloride, methylaluminum sesquichloride, diethylaluminum chloride and trimethylaluminum and mixtures thereof. The partial hydrolysis products of aluminum alkyls with alcohols can also be used.

Most useful metal alkyls are triethylaluminum, trimethylaluminum, trihexylaluminum and butyllithium.

The present invention further provides a process for the polymerization of unsaturated monomers using the abovementioned metering method.

The process is suitable, in particular, for the polymerization of olefins and especially for the polymerization of 1-olefins (α-olefins), i.e. hydrocarbons having terminal double bonds. Suitable monomers can be functionalized olefinically unsaturated compounds such as ester or amide derivatives of acrylic or methacrylic acid, for example acrylates, methacrylates, or acrylonitrile. Preference is given to nonpolar olefinic compounds, including aryl-substituted α-olefins. Particularly preferred 1-olefins are linear or branched C₂-C₁₂-1-alkenes, in particular linear C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene or vinylaromatic compounds such as styrene or substituted styrene. It is also possible to polymerize mixtures of various α-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

The process can be used in particular for the polymerization or copolymerization of ethylene or propylene. As comonomers in ethylene polymerization, preference is given to using C₃-C₈-1-olefins, in particular 1-butene, 1-pentene, 1-hexene and/or 1-octene. Preferred comonomers in propylene polymerization are ethylene and/or butene. Particular preference is given to a process in which ethylene is copolymerized with 1-hexene or 1-butene.

The polymerization of olefins can be carried out using all customary olefin polymerization catalysts. Preference is given to using single-site catalysts. For the purposes of the present invention, single-site catalysts are catalysts based on chemically uniform transition metal coordination compounds. Particularly suitable single-site catalysts are those comprising bulky sigma- or pi-bonded organic ligands, e.g. catalysts based on bis-cp or mono-cp complexes, hereinafter also referred to collectively as metallocene catalysts, or catalysts based on later transition metal complexes, in particular iron-bisimine complexes.

Furthermore, it is also possible to use Phillips catalysts based on chromium oxide or Ti-based Ziegler catalysts. The preparation and use of the known catalysts in olefin polymerization are generally known.

Preference is given to the process in combination with hybrid catalysts. For the purposes of the present invention, hybrid catalysts are catalyst systems which have at least two different types of active sites derived from at least two chemically different starting materials. The different active sites can be active sites which are comprised in various single-site catalysts. However, it is also possible to use active sites which are derived from Ziegler-Natta catalysts or catalysts based on chromium, e.g. Phillips catalysts.

Particularly preferred hybrid catalysts are those comprising late transition metal complexes, in particular iron-bisimine complexes, and at least one further mono-cp or bis-cp metallocene or a Ziegler catalyst.

The process can be carried out using all industrially known low-pressure polymerization methods at temperatures in the range from 0 to 200°C, preferably from 25 to 150°C and particularly preferably from 40 to 130°C, and under pressures of from 0.05 to 10 MPa and particularly preferably from 0.3 to 4 MPa. The polymerization can be carried out batchwise or preferably continuously in one or more stages. Solution processes, suspension processes, stirred gas-phase processes and gas-phase fluidized-bed processes are all possible. Processes of this type are generally known to those skilled in the art. Among the polymerization processes mentioned, gas-phase polymerization, in particular in gas-phase fluidized-bed reactors, solution polymerization and suspension polymerization, in particular in loop reactors and stirred tank reactors, are preferred.

In the case of suspension polymerizations, polymerization is usually carried out in a suspension medium, preferably in an inert hydrocarbon such as isobutane or mixtures of hydrocarbons or else in the monomers themselves. Suspension polymerization temperatures are usually in the range from -20 to 115°C, and the pressure is in the range from 0.1 to 10 MPa. The solids content of the suspension is generally in the range from 10 to 80%. The polymerization can be carried out both batchwise, e.g. in stirring autoclaves, and continuously, e.g. in tube reactors, preferably in loop reactors. In particular, it can be carried out by the Phillips PF process as described in US-A 3 242 150 and US-A 3 248 179.

Suitable suspension media are all media which are generally known for use in suspension reactors. The suspension medium should be inert and be liquid or supercritical under the reaction conditions and should have a boiling point which is significantly different from those of the monomers and comonomers used in order to make it possible for the starting materials to be recovered from the product mixture by distillation. Customary suspension media are saturated hydrocarbons having from 4 to 12 carbon atoms, for example isobutane, butane, propane, isopentane, pentane and hexane, or a mixture of these, which is also known as diesel oil.

In a further, preferred suspension polymerization process, the polymerization takes place in a cascade of 2 or preferably 3 or 4 stirred vessels in the presence of a Ziegler catalyst. The molar mass of the polymer fraction prepared in each of the reactors is preferably set by addition of hydrogen to the reaction mixture. The polymerization process is preferably carried out with the highest hydrogen concentration and the lowest comonomer concentration, based on the amount of monomer, being set in the first reactor. In the subsequent further reactors, the hydrogen concentration is gradually reduced and the comonomer concentration is altered, in each case once again based on the amount of monomer. Ethylene or propylene is preferably used as monomer and a 1-olefin having from 4 to 10 carbon atoms is preferably used as comonomer.

Because the Ziegler catalyst generally suffers a reduction in its polymerization activity with rising hydrogen concentration and because a process-related dilution of the suspension with increasing total conversion occurs, the reacting polymer particles in the first reactor have the longest mean residence time. For this reason, the highest conversion of the added monomer to homopolymer or of the added monomer and comonomers to copolymer is achieved in the first reactor, compared to the downstream reactors.

In loop reactors, the polymerization mixture is pumped continuously through a cyclic reactor tube. As a result of the pumped circulation, continual mixing of the reaction mixture is achieved and the catalyst introduced and the monomers fed in are distributed in the reaction mixture. Furthermore, the pumped circulation prevents sedimentation of the suspended polymer. The removal of the heat of reaction via the reactor wall is also promoted by the pumped circulation. In general, these reactors consist essentially of a cyclic reactor tube having one or more ascending legs and one or more descending legs which are enclosed by cooling jackets for removal of the heat of reaction and also horizontal tube sections which connect the vertical legs. The impeller pump, the catalyst feed facilities and the monomer feed facilities and also the discharge facility, thus in general the settling legs, are usually installed in the lower tube section. However, the reactor can also have more than two vertical tube sections, so that a meandering arrangement is obtained.

The polymer is generally discharged continuously from the loop reactor via settling legs. These settling legs are vertical attachments which branch off from the lower reactor tube section and in which the polymer particles can sediment. After sedimentation of the polymer has occurred to a particular degree, a valve at the lower end of the settling legs is briefly opened and the sedimented polymer is discharged discontinuously.

In a preferred embodiment, the suspension polymerization is carried out in a loop reactor at an ethylene concentration of at least 10 mol%, preferably 15 mol%, particularly preferably 17 mol%, based on the suspension medium. For the purpose of these figures, the suspension medium is not the input suspension medium such as isobutane alone but rather the mixture of this input suspension medium with the monomers dissolved therein. The ethylene concentration can easily be determined by gas-chromatographic analysis of the suspension medium.

A preferred polymerization process is that carried out in a horizontally or vertically stirred or fluidized gas phase.

Particular preference is given to gas-phase polymerization in a fluidized-bed reactor, in which the circulated reactor gas is fed in at the lower end of a reactor and is taken off again at its upper end. When such a process is employed for the polymerization of 1-olefins, the circulated reactor gas is usually a mixture of the 1-olefin to be polymerized, if desired a molecular weight regulator such as hydrogen and inert gases such as nitrogen and/or lower alkanes such as ethane, propane, butane, pentane or hexane. The velocity of the reactor gas has to be sufficiently high firstly to fluidize the mixed bed of finely divided polymer serving as polymerization zone in the tube and secondly to remove the heat of polymerization effectively (noncondensed mode). The polymerization can also be carried out in the condensed or supercondensed mode, in which part of the circulating gas is cooled to below the dew point and returned to the reactor together as a two-phase mixture or separately as a liquid and a gas phase in order to make additional use of the enthalpy of vaporization for cooling the reaction gas.

In gas-phase fluidized-bed reactors, it is advisable to work at pressures of from 0.1 to 10 MPa, preferably from 0.5 to 8 MPa and in particular from 1.0 to 3 MPa. In addition, the cooling capacity depends on the temperature at which the (co)polymerization in the fluidized bed is carried out. The process is advantageously carried out at temperatures of from 30 to 160°C, particularly preferably from 65 to 125°C, with temperatures in the upper part of this range being preferred for copolymers of relatively high density and temperatures in the lower part of this range being preferred for copolymers of lower density.

It is also possible to use a multizone reactor in which two polymerization zones are linked to one another and the polymer is passed alternately a plurality of times through these two zones, with the two zones also being able to have different polymerization conditions. Such a reactor is described, for example, in WO 97/04015 and WO 00/02929.

The different or else identical polymerization processes can also optionally be connected to one another in series and thus form a polymerization cascade. It is also possible to operate the reactor using two or more identical or different processes. However, the polymerization is preferably carried out in only a single reactor.

All proportions and ratios in the present patent application are by weight based on the total weight of the corresponding mixtures, unless indicated otherwise.

The invention is illustrated below with the aid of an example, without being restricted thereto.

### Example

A conductivity measurement sensor from Yokogawa, special model S250155C J5-17 was used. The conductivity measurement sensor 1 had a measurement cell 2 (Yokogawa, model SX42-SX34-DF) having 2 stainless steel electrodes and an integrated Pt100 temperature sensor. The system cell constant is 0.01005 cm⁻¹ and the measurement range is 0-0.200 µS/cm. The flow valve is from Yokogawa, model FF40S22.

The measurement solution, which had been brought to the appropriate temperature in a double-walled vessel, could be fed into the conductivity measurement sensor 2 by means of a magnetic centrifugal pump 3 (IWAKI MD 6, pumping rate: 8 I/min). The measurement sensor was connected to a processing unit which displayed the temperature and conductivity.

500 ml of purified n-hexane were placed in the apparatus under protective gas and brought to a temperature of 20°C. The antistatic Costelan AS 100 (from Costenoble, Eschborn, Germany) was then added a little at a time and, after sufficient mixing and constancy of the temperature, the conductivity value was read off. To monitor the concentration, the solution was subsequently diluted with a defined volume of n-hexane and the conductivity was read off. Between the experiments, the measurement solution was drained and the apparatus was rinsed a number of times with n-hexane.

All measurements were carried out at a temperature of 20°C. The results are shown in Table 1.

**Table 1**

| Concentration of Costelan | Conductivity |
|---|---|
| [% by weight] | [µS/cm] |
| 0.000 | 0.000 |
| 0.032 | 0.003 |
| 0.061 | 0.004 |
| 0.095 | 0.007 |
| 0.111 | 0.008 |
| 0.129 | 0.009 |
| 0.146 | 0.010 |
| 0.160 | 0.011 |
| 0.175 | 0.012 |
| 0.191 | 0.013 |
| 0.207 | 0.014 |
| 0.223 | 0.015 |
| 0.239 | 0.016 |
| 0.257 | 0.017 |
| 0.276 | 0.018 |
| 0.297 | 0.019 |
| 0.316 | 0.020 |
| 0.335 | 0.021 |
| 0.573 | 0.034 |
| 0.842 | 0.047 |
| 1.124 | 0.061 |

A linear dependence of the conductivity on the concentration is obtained.

The series of experiments using different concentrations of Costelan AS100 shows that this measurement principle is very readily able to react sensitively to the changes in the concentration and thus ensure an accurate measurement. Such a conductivity measurement sensor can be installed without problems in all lines of a polymerization plant.

## Claims

1. A method for metering polar, antistatically acting process auxiliaries into a polymerization reactor in which the process auxiliaries are present in solution in a nonpolar solvent, wherein the electrical conductivity of the solution is measured and the amount of the process auxiliary metered in is determined from the electrical conductivity, the antistatically acting process auxiliary being a chemical compound or a mixture of chemical compounds which has an electrical conductivity of at least 0.05 µS/cm and the nonpolar solvent being a solvent having an electrical conductivity of not more than 0.01 µS/cm.

2. The method according to claim 1, wherein ethylene is homopolymerized or ethylene is copolymerized with 1-butene, 1-hexene or 1-octene.

3. The method according to claim 1, wherein propylene is homopolymerized or propylene is copolymerized with ethylene, 1-butene, 1-hexene or 1-octene.

4. The method according to any of the preceding claims, wherein the polymerization reactor comprises a gas-phase fluidized bed.

5. The method according to any of the preceding claims, wherein the amount of the solution comprising the process auxiliary which is metered into the reactor per unit time is measured.

6. The method according to claim 5, wherein the measured amount of process auxiliary is compared with a set value and, in the case of deviations, the flow of the solution comprising the process auxiliary is adjusted.

7. The method according to any of the preceding claims, wherein the process auxiliary has an electrical conductivity of at least 0.1 µS/cm, in particular at least 0.5 µS/cm.

8. The method according to any of the preceding claims, wherein the solvent has an electrical conductivity of not more than 10⁻³ µS/cm. in particular not more than 10⁻⁴ µS/cm.

9. The method according to any of the preceding claims, wherein the antistatically acting compound comprises a functional group selected from among -OH, -COOH, -NH₂, -NHR'-SH, -PH₂, -PHR¹ and -SO₃H, where R¹ is an alkyl, aryl, alkylaryl or arylalkyl radical in which one or more carbon atoms may also be replaced by heteroatoms.

10. The method according to any of the preceding claims, wherein the antistatically acting compound comprises a polysulfone copolymer, a polymeric polyamine and an oil-soluble sulfonic acid.

11. A process for the polymerization of unsaturated monomers, in particular 1-olefins, using the metering method according to any of the preceding claims.

## Patentansprüche

1. Verfahren zur Dosierung polarer, antistatisch wirkender Verfahrenshilfsmittel in einen Polymerisationsreaktor, worin die Verfahrenshilfsmittel in Lösung in einem nicht polaren Lösungsmittel vorliegen, worin die elektrische Leitfähigkeit der Lösung gemessen und die Menge des eindosierten Verfahrenshilfsmittels aus der elektrischen Leitfähigkeit ermittelt wird, wobei das antistatisch wirkende Verfahrenshilfsmittel eine chemische Verbindung oder ein Gemisch aus chemischen Verbindungen mit einer elektrischen Leitfähigkeit von mindestens 0,05 µS/cm ist und das nicht polare Lösungsmittel ein Lösungsmittel mit einer elektrischen Leitfähigkeit von nicht mehr als 0,01 µS/cm ist.

2. Verfahren nach Anspruch 1, worin Ethylen homopolymerisiert oder Ethylen mit 1-Buten, 1-Hexen oder 1-Octen copolymerisiert wird.

3. Verfahren nach Anspruch 1, worin Propylen homopolymerisiert oder Propylen mit Ethylen, 1-Buten, 1-Hexen oder 1-Octen copolymerisiert wird.

4. Verfahren nach einem der vorangehenden Ansprüche, worin der Polymerisationsreaktor eine Gasphasenwirbelschicht enthält.

5. Verfahren nach einem der vorangehenden Ansprüche, worin die Menge der das in den Reaktor eindosierte Verfahrenshilfsmittel enthaltenden Lösung pro Zeiteinheit gemessen wird.

6. Verfahren nach Anspruch 5, worin die gemessene Verfahrenshilfsmittelmenge mit einem Sollwert verglichen wird und im Abweichungsfall der das Verfahrenshilfsmittel enthaltende Lösungsfluss abgeglichen wird.

7. Verfahren nach einem der vorangehenden Ansprüche, worin das Verfahrenshilfsmittel eine elektrische Leitfähigkeit von mindestens 0,1 µS/cm, insbesondere mindestens 0,5 µS/cm aufweist.

8. Verfahren nach einem der vorangehenden Ansprüche, worin das Lösungsmittel eine elektrische Leitfähigkeit von nicht mehr als 10⁻³ µS/cm, insbesondere nicht mehr als 10⁻⁴ µS/cm aufweist.

9. Verfahren nach einem der vorangehenden Ansprüche, worin die antistatisch wirkende Verbindung eine unter -OH, -COOH, -NH₂, -NHR¹-SH, -PH₂, -PHR¹ und -SO₃H ausgewählte funktionelle Gruppe enthält, worin R¹ ein Alkyl-, Aryl-, Alkylaryl- oder Arylalkylrest ist, in dem ein oder mehr Kohlenstoffatom(e) auch durch Heteroatome ersetzt sein kann/können.

10. Verfahren nach einem der vorangehenden Ansprüche, worin die antistatisch wirkende Verbindung ein Polysulfon-Copolymer, ein polymeres Polyamin und eine öllösliche Sulfonsäure enthält.

11. Verfahren zur Polymerisation ungesättigter Monomere, insbesondere 1-Olefinen, mittels des Dosierverfahrens nach einem der vorangehenden Ansprüche.

## Revendications

1. Méthode pour doser des auxiliaires de procédé polaires agissant de manière antistatique dans un réacteur de polymérisation dans lequel les auxiliaires de procédé sont présents en solution dans un solvant non polaire, où la conductivité électrique de la solution est mesurée et la quantité d'auxiliaire de procédé dosée est déterminée à partir de la conductivité électrique, l'auxiliaire de procédé agissant de manière antistatique étant un composé chimique ou un mélange de composés chimiques qui présente une conductivité électrique d'au moins 0,05 µS/cm et le solvant non polaire étant un solvant présentant une conductivité électrique de pas plus de 0,01 µS/cm.

2. Méthode selon la revendication 1, où de l'éthylène est homopolymérisé ou de l'éthylène est copolymérisé avec du 1-butène, du 1-hexène ou du 1-octène.

3. Méthode selon la revendication 1, où du propylène est homopolymérisé ou du propylène est copolymérisé avec de l'éthylène, du 1-butène, du 1-hexène ou du 1-octène.

4. Méthode selon l'une quelconque des revendications précédentes, où le réacteur de polymérisation comprend un lit fluidisé en phase gazeuse.

5. Méthode selon l'une quelconque des revendications précédentes, où la quantité de solution comprenant l'auxiliaire de procédé qui est dosé dans le réacteur par unité de temps est mesurée.

6. Méthode selon la revendication 5, où la quantité mesurée d'auxiliaire de procédé est comparée avec une valeur de consigne et, dans le cas de déviations, le flux de la solution comprenant l'auxiliaire de procédé est ajusté.

7. Méthode selon l'une quelconque des revendications précédentes, où l'auxiliaire de procédé présente une conductivité électrique d'au moins 0,1 µS/cm, en particulier d'au moins 0,5 µS/cm.

8. Méthode selon l'une quelconque des revendications précédentes, où le solvant présente une conductivité électrique de pas plus de 10⁻³ µS/cm, en particulier de pas plus de 10⁻⁴ µS/cm.

9. Méthode selon l'une quelconque des revendications précédentes, où le composé agissant de manière antistatique comprend un groupe fonctionnel choisi parmi -OH, -COOH, -NH₂, -NHR¹-SH, -PH₂, -PHR¹ et -SO₃H, où R¹ représente un radical alkyle, aryle, alkylaryle ou arylalkyle dans lequel un ou plusieurs atomes de carbone peuvent aussi être remplacés par des hétéroatomes.

10. Méthode selon l'une quelconque des revendications précédentes, où le composé agissant de manière antistatique comprend un copolymère de polysulfone, une polyamine polymère et un acide sulfonique soluble dans l'huile.

11. Procédé pour la polymérisation de monomères insaturés, en particulier des 1-oléfines, en utilisant la méthode de dosage selon l'une quelconque des revendications précédentes.
